# EUROPÄISCHE PATENTSCHRIFT

(11) **EP 3 530 534 B1**
(45) Veröffentlichungstag und Bekanntmachung des Hinweises auf die Patenterteilung: **28.05.2025**
(21) Anmeldenummer: 18211629.3
(22) Anmeldetag: 11.12.2018
(51) Int. Cl.: B60W 10/08, B60W 10/22, B60W 10/26, B60W 20/15, B60W 10/30, B60L 58/13

(54) **VERFAHREN ZUM BETRIEB EINES BORDNETZES EINES HYBRIDKRAFTFAHRZEUGS UND HYBRIDKRAFTFAHRZEUG**
METHOD FOR OPERATING AN ON-BOARD POWER SUPPLY NETWORK OF A HYBRID MOTOR VEHICLE AND HYBRID MOTOR VEHICLE
PROCÉDÉ DE FONCTIONNEMENT D'UN RÉSEAU DE BORD D'UN VÉHICULE À MOTEUR HYBRIDE ET VÉHICULE À MOTEUR HYBRIDE

(30) Priorität: 26.02.2018 DE 102018202854
(43) Veröffentlichungstag der Anmeldung: 28.08.2019
(73) Patentinhaber: AUDI AG, 85045 Ingolstadt (DE)
(72) Erfinder: Lassenberger, Stephan, 75242 Neuhausen (DE)

(56) Entgegenhaltungen:
- DE-A1- 102014 009 448
- DE-A1- 102016 005 125
- ANONYMOUS: "Der Elektrifizierungsbaukasten: Neue Technologien mit 12 und 48 Volt | Audi MediaCenter", 9 November 2015 (2015-11-09), XP055908847, Retrieved from the Internet <URL:https://www.audi-mediacenter.com/de/audi-future-performance-days-2015-5097/der-elektrifizierungsbaukasten-neue-technologien-mit-12-und-48-volt-5099> [retrieved on 20220404]

## Beschreibung

Die Erfindung betrifft ein Verfahren zum Betrieb eines Bordnetzes eines Hybridkraftfahrzeugs, wobei an das Bordnetz ein Energiespeicher, insbesondere eine Batterie, ein Elektromotor eines Hybrid-Antriebsstrangs, der auch einen Verbrennungsmotor aufweist, und generatorisch betreibbare Aktoren eines elektromechanischen Fahrwerkssystems angeschlossen sind, wobei zur Einspeisung von durch wenigstens einen Teil der Aktoren erzeugter elektrischer Energie in das Bordnetz wenigstens eine Reservekapazität des Energiespeichers freigehalten wird, wobei die freizuhaltende Reservekapazität in Abhängigkeit wenigstens einer den aktuellen und/oder zukünftigen Betrieb des Hybridkraftfahrzeugs beschreibenden Situationsinformation dynamisch angepasst wird. Daneben betrifft die Erfindung ein Hybridkraftfahrzeug.

Hybridkraftfahrzeuge weisen in ihrem Hybrid-Antriebsstrang sowohl einen Elektromotor als auch einen Verbrennungsmotor auf. Dabei wurden insbesondere auch Hybridkraftfahrzeuge vorgeschlagen, bei denen die Leistung des Elektromotors eher klein ist, so dass der Elektromotor an einem Bordnetz mittlerer Spannung, beispielsweise bei 48 V, betrieben werden kann. Derartige Hybridkraftfahrzeuge können auch elektromechanische Fahrwerksysteme aufweisen, die auf der gleichen Spannungslage liegen und somit an das selbe Bordnetz angeschlossen werden können.

Elektromechanische Fahrwerkssysteme umfassen beispielsweise Wankstabilisatoren und weisen üblicherweise Aktoren auf, beispielsweise ansteuerbare Dämpfer und/oder Stabilisatoren, um verschiedene Verstellungen des Aufbaus gegenüber den Rädern zu ermöglichen, so dass beispielsweise ein Ausgleich von Aufbaubewegungen und dergleichen ermöglicht werden. Derartige Aktoren können beispielsweise einen Elektromotor umfassen beziehungsweise ein Elektromotor sein, wobei insbesondere jedem Rad wenigstens ein Aktor zugeordnet ist.

Wie bereits erwähnt, werden für elektromechanische Fahrwerkssysteme mit höherer Leistungsanforderung Spannungslagen oberhalb der heute in Kraftfahrzeugen gebräuchlichen 12 V eingesetzt. So wurden im Stand der Technik bereits aktive Radaufhängungen und/oder aktive Wankstabilisierungen vorgeschlagen, die mit einer Spannungslage von 48 V arbeiten. Diese elektromechanischen Fahrwerkssysteme bieten prinzipiell, insbesondere im Fall von Elektromotoren in den Aktoren, auch die Möglichkeit, die Aktoren generatorisch zu betreiben. Ein generatorischer Betrieb ist beispielsweise zweckmäßig, wenn eine Hubbewegung des Aufbaus über den Aktor abzubremsen ist. Dann ist es möglich, mechanische Bewegungsenergie in elektrische Energie umzuwandeln, welche wieder in den Energiespeicher des Bordnetzes des elektromechanischen Fahrwerkssystems zurückgespeist wird.

Im Stand der Technik wurde auch bereits vorgeschlagen, Stoßdämpfer beziehungsweise Radaufhängungen im Allgemeinen mit generatorischen Mitteln zur Energierückgewinnung an dieser Stelle auszustatten. Beispielsweise offenbart DE 10 2009 010 144 A1 ein Verfahren und eine Ladevorrichtung zum Aufladen einer Kraftfahrzeugbatterie, wobei eine mechanische Leistung an der Fahrzeugfederung in elektrische Leistung umgewandelt wird. DE 10 2010 036 658 A1 betrifft eine Vorrichtung zur Umwandlung von kinematischer Energie in elektrische Energie mittels einer beweglichen Fahrzeugkomponente eines Kraftfahrzeugs, wobei mittels der Energieerzeugungseinheit generierte Spannungsspitzen als elektrische Energie in die Energiespeichereinheit eingespeist werden können, um diese aufzuladen. Die Energieerzeugungseinheit kann die Funktion einer beweglichen Fahrzeugkomponente, insbesondere eines Stoß- oder Schwingungsdämpfers, übernehmen.

Aus Kosten- und Bauraumgründen ist es sinnvoll, in Hybridkraftfahrzeugen, welche auch über ein auf der gleichen Spannungslage wie der Elektromotor des Hybrid-Antriebsstrangs arbeitendes elektromechanisches Fahrwerkssystem verfügen, die Bordnetzkomponenten im Verbund zu nutzen, mithin sowohl den Elektromotor des Hybrid-Antriebsstrangs als auch die generatorisch betreibbaren Aktoren des elektromechanischen Fahrwerkssystems an dasselbe Bordnetz anzuschließen. In einem solchen Hybridkraftfahrzeug wird der Energiespeicher des Bordnetzes durch den Hybrid-Antriebsstrang stärker und vor allem in größeren Hüben zyklisiert als dies gewöhnlich für separate Energiespeicher, die nur dem elektromechanischen Fahrwerkssystemen zugeordnet sind, der Fall ist.

Um eine Rückspeisung der elektrischen Energie bei generatorischem Betrieb des elektromechanischen Fahrwerkssystems jederzeit gewährleisten zu können, wurde vorgeschlagen, ein maximales Rückspeisepotenzial des elektromechanischen Fahrwerkssystems in dem Bordnetz statisch vorzuhalten, insbesondere als Reservekapazität des Energiespeichers. Eine solche Reservekapazität, also der statische Rückspeisevorhalt, muss bei der Systemauslegung des Bordnetzes berücksichtigt werden und kann prinzipiell durch zwei Maßnahmen umgesetzt werden. Eine erste Möglichkeit besteht in einer Reduzierung des Ausnutzungsgrades des bestehenden Bordnetzes für das Hybridsystem des Hybridkraftfahrzeugs, insbesondere also in einer Reduzierung der nutzbaren Ladezustände des Energiespeichers. Dies bedeutet allerdings eine Einschränkung der Nutzung elektrischer Energie, so dass die Kohlendioxid-Kennziffer des Kraftfahrzeugs verschlechtert wird, nachdem die potenziell über Rekuperation durch den Hybrid-Antriebsstrang rückgespeiste Energie begrenzt werden muss.

Eine weitere Lösungsmöglichkeit ist die Vergrößerung des Energiespeichers über die für den Hybrid-Antriebsstrang benötige Auslegungsgröße. Dies entspricht letztlich der Vergrößerung des Energiespeichers des Bordnetzes um den statischen Rückspeisevorhalt des elektromechanischen Fahrwerkssystems. Durch diese vergrößerte Auslegung steigen Kosten und Aufwand für das Bordnetz deutlich an.

Dabei sei darauf hingewiesen, dass aus Kosten- und Bauraumgründen eine Verkomplizierung der Aktoren selbst nicht gewünscht ist. Aus Sicherheitsgründen sind die Aktoren des elektromechanischen Fahrwerkssystems nicht abschaltbar, so dass mithin generierte elektrische Energie durch Umwandlung mechanischer Energie grundsätzlich in das Bordnetz eingespeist wird.

DE 10 2016 005 125 A1 offenbart ein Verfahren zum Steuern einer Energiespeichereinrichtung eines Mild-Hybrid-Kraftfahrzeugs sowie eine Ladezustandssteuereinrichtung für ein Mild-Hybrid-Kraftfahrzeug. Dabei soll die Energiespeichereinrichtung eine Gesamtkapazität aufweisen, allerdings soll ein Ladezustand der Energiespeichereinrichtung zwischen einem oberen und einem unteren Schwellwert für einen Zielladezustandsbereich der Energiespeichereinrichtung eingestellt werden. Während mindestens einer Fahrt soll ein Lade- und ein Entladevorgang mit Bezug auf mit der Energiespeichereinrichtung ausgetauschte Energiemengen überwacht und daraus mit einer vorgebbaren Wahrscheinlichkeit zu erwartende Energiemengen für zukünftige Lade- und Entladevorgänge ermittelt werden, woraus wiederum der obere und der untere Schwellwert für den Zielladezustandsbereich angepasst werden sollen.

DE 10 2014 009 448 A1 betrifft eine prädiktive Ladezustandssteuerung einer Energiespeichereinrichtung eines elektrisch betriebenen Kraftfahrzeugs, wobei ein Energiebedarf einer ersten Einrichtung eines Bordnetzes auf einem Streckenabschnitt prädiziert werden soll und bei Unterschreiten eines vorbestimmten Schwellenwerts des prädizierten Energiebedarfs der ersten Einrichtung eine für die erste Einrichtung des Bordnetzes reservierte Energiemenge eines Energievorhalts der Energiespeichereinrichtung zumindest teilweise einer zweiten Einrichtung des Bordnetzes zugeteilt werden soll. So soll der Kraftstoffverbrauch und damit der CO₂-Ausstoß verringert werden. Eine unnötige Energiereserve soll vermieden werden, wobei es sich bei der ersten Einrichtung um eine Fahrwerkseinrichtung handeln kann, beispielsweise einen elektrischen Turbolader und/oder einen Wankstabilisator. Bei der zweiten Einrichtung soll es sich insbesondere um eine Komfortsystemeinrichtung handeln.

In einem Artikel von Anonymous: "Der Elektrifizierungsbaukausten: Neue Technologien mit 12 und 48 Volt | Audi MediaCenter", 9. November 2015, XP055908847, wird beschrieben, dass auch elektromechanische Fahrwerksysteme rekuperativ einspeisen können.

Der Erfindung liegt daher die Aufgabe zugrunde, ein demgegenüber verbessertes Energiemanagement in einem Bordnetz, an das sowohl ein elektromechanisches Fahrwerkssystem als auch ein Elektromotor eines Hybrid-Antriebsstrangs angeschlossen sind, zu ermöglichen.

Zur Lösung dieser Aufgabe sind bei einem Verfahren der eingangs genannten Art erfindungsgemäß die Merkmale des Anspruchs 1 vorgesehen. Dabei kann in Ausführungsbeispielen die freizuhaltende Reservekapazität zusätzlich in Abhängigkeit wenigstens einer den Fahrstil des Fahrers des Hybridkraftfahrzeuges beschreibenden Fahrstilinformation dynamisch angepasst werden.

Erfindungsgemäß wurde bekannt, dass der Kapazitätsbedarf für die Rückspeisung von Aktoren von elektromechanischen Fahrwerkssystemen vor allem vom Streckenprofil, dem Fahrerprofil und der Fahrbahnbeschaffenheit abhängig ist. Durch Vernetzung entsprechender Situationsinformationen und Fahrstilinformationen mit dem Energiemanagement des Bordnetzes, beispielsweise in einem Energiemanagementsteuergerät, ist es möglich, den aktuell benötigten Rückspeisevorhalt, also die freizuhaltende Reservekapazität, abzuschätzen. Auf diese Weise kann die freizuhaltende Reservekapazität dynamisch an den zu erwartenden Bedarf angepasst werden. Bei einem kleineren Rückspeisevorhalt des elektromechanischen Fahrwerkssystems kann die freiwerdende Kapazität des Energiespeichers durch das Hybridsystem des Hybrid-Antriebsstrangs genutzt werden, das bedeutet, durch Verringerung der Reservekapazität freigegebene Kapazität des Energiespeichers kann dem Elektromotor bereitgestellt werden. Der Energiespeicher des Bordnetzes des Hybridkraftfahrzeugs kann hierdurch besser ausgelastet werden und gegebenenfalls auch kleiner ausgelegt werden, ohne die Kohlendioxid-Kennziffer des Hybridkraftfahrzeugs zu verschlechtern.

Dabei sei noch angemerkt, dass auch grundsätzlich passive Rückspeiseelemente eines Fahrwerkssystems, beispielsweise die in DE 10 2009 010 144 A1 beziehungsweise DE 10 2010 036 658 A1 genannten Fahrzeugkomponenten, welche elektrische Energie rückspeisen können, als Aktoren im erfindungsgemäßen Sinne genutzt und aufgefasst werden können. Besondere Vorteile ergeben sich jedoch im Rahmen der vorliegenden Erfindung hauptsächlich für tatsächliche, mithin aktiv ansteuerbare Aktoren, beispielsweise solche, die einen Aktor-Elektromotor aufweisen, da diese in ihrer aktuellen Form auslegungsbedingt grundsätzlich generierte Energie in das Bordnetz rückspeisen und zu einer Vermeidung dieses Vorgangs aufwendig umgestaltet werden müssten. Bei dem elektromechanischen Fahrwerkssystem handelt es sich also insbesondere um ein aktives Fahrwerkssystem.

Ein Rückspeisevorhalt und somit die freizuhaltende Reservekapazität ist üblicherweise auch auf einen Zeitraum, insbesondere einen Prädiktionszeitraum, bezogen, beispielsweise einen, für den angenommen wird, dass die aktuelle Fahrsituation bezüglich der rückgewinnbaren Energie über die Aktoren erhalten bleibt und/oder vorhersagbar ist. Ergibt sich beispielweise, worauf im Folgenden noch näher eingegangen wird, aus digitalem Kartenmaterial eines Navigationssystems des Kraftfahrzeugs, dass eine unebene Landstraße schlechter Fahrbahnbeschaffenheit, die eine große Menge umwandelbarer mechanischer Energie bereitstellt, ohne dass dies durch zu verbrauchende Energie kompensiert wird, befahren wird, ergibt sich ein größerer Rückspeisevorhalt. Entsprechend kann es im Rahmen der vorliegenden Erfindung auch zweckmäßig sein, dass ein Zeitraum, auf den die freizuhaltende Reservekapazität bezogen ist, ebenso dynamisch gewählt wird, insbesondere aufgrund der den zukünftigen Betrieb des Kraftfahrzeugs beschreibenden Situationsinformation. Ist beispielsweise von vornherein bekannt, wie lange ein abwärtsführendes, kurvenreichen Stück anhält, in dem mehr Energie seitens der Aktoren generiert wird als sie verbraucht wird und zudem von dem Elektromotor kein besonderer Verbrauch zu erwarten ist, kann eine entsprechende freizuhaltende Reservekapazität für dieses Streckenstück bereitgehalten werden, ein "Zeitraum" kann dabei im Übrigen auch durch eine abzufahrende Streckenlänge beschrieben sein.

Es sei zudem an dieser Stelle angemerkt, dass eine zu geringe Bemessung der freizuhaltenden Reservekapazität des Energiespeichers nicht zwangsläufig zu einer Überladung des Bordnetzes führen muss, nachdem Maßnahmen existieren, um Energiesenken innerhalb des Bordnetzes bei Bedarf zu erzeugen, beispielsweise ein Betrieb des Elektromotors, obwohl dies in der aktuellen Situation nicht nötig beziehungsweise nicht energieeffizient wäre.

In einer zweckmäßigen Ausgestaltung der vorliegenden Erfindung kann als Situationsinformation eine Streckenklasse und/oder eine Fahrbahnbeschaffenheit der aktuell und/oder zukünftig befahrenen Strecke verwendet werden. In einer möglichen, einfachen Realisierung kann beispielsweise eine statische Klassifizierung des Rückspeisevorhalts (hoch, mittel, niedrig) auf Basis von Streckentypen (beispielsweise Stadtverkehr, Autobahn, kurvige Landstraße) in Zusammenhang mit einer Regelstrategie des elektromechanischen Fahrwerkssystems erfolgen. Jedoch wird eine dezidierte Analyse, die sich insbesondere auch auf weitere Eigenschaften der vorausliegenden Strecke bezieht, bevorzugt, wie im Folgenden noch genauer dargelegt werden wird. Streckenklassen können beispielsweise eine Stadtverkehrsklasse und/oder eine Autobahnklasse und/oder eine kurvige Landstraßenklasse und/oder eine wenig kurvige Landstraßenklasse und/oder eine Offroadklasse umfassen. Besonders bevorzugt ist es, wenn die Streckenklasse von einem Navigationssystem des Kraftfahrzeugs bereitgestellt wird, insbesondere aus digitalem Kartenmaterial des Navigationssystems in Zusammenschau mit einer aktuellen Position des Kraftfahrzeugs, welche beispielsweise mittels einem GPS-Sensor beziehungsweise allgemein GNSS-Sensor bestimmt werden kann.

Die vorliegende Erfindung sieht vor, dass als Situationsinformation ein prädiktiver Rückspeisebedarf für die Zukunft in Abhängigkeit einer insbesondere von einem Navigationssystem des Hybridkraftfahrzeugs gelieferten, eine zukünftige Route des Hybridkraftfahrzeugs beschreibenden Routeninformation unter Berücksichtigung von Streckenklassen und/oder Fahrbahnbeschaffenheiten entlang der Route ermittelt wird. Während die Kenntnis über die derzeit befahrene Strecke mittels digitalem Kartenmaterial aus dem Navigationssystem bereits zweckmäßig ist, um das voraussichtliche Rückspeisepotenzial des elektromechanischen Fahrwerkssystems abzuschätzen, kann durch eine Verknüpfung mit der über das Navigationssystem geplanten Route eine noch bessere Vorausschau erstellt werden. Insbesondere kann dabei nicht nur abgeschätzt werden, wie lange die aktuelle Fahrsituation des Hybridkraftfahrzeugs weiter bestehen wird, sondern durch die Berücksichtigung anschließender Streckenabschnitte sowie deren Streckenklasse/Fahrbahnbeschaffenheit kann auch dort bereits ein Rückspeisebedarf vorhergesagt werden, was wiederum für den vorangehenden Streckenabschnitt und die dortige benötigte freigehaltene Reservekapazität berücksichtigt werden kann. Mit besonderem Vorteil ist es mithin erfindungsgemäß vorgesehen, in Abhängigkeit des prädiktiven Rückspeisebedarfs einen die zukünftigen Reservekapazitäten beschreibenden Reservekapazitätsverlauf entlang der Route zu ermitteln.

Eine weitere Verbesserung ergibt sich, wenn zusätzlich auch ein prädiktiver Ladezustand des Energiespeichers und/oder ein Rekuperationspotenzial des Elektromotors entlang der Route ermittelt und bei der Ermittlung der freizuhaltenden Reservekapazität berücksichtigt wird. Ist beispielsweise aufgrund einer geplanten häufigen Nutzung des Elektromotors ohnehin mit einem niedrigen Ladezustand des Energiespeichers zu rechnen, ist es problemloser möglich, generatorisch erzeugte Energie der Aktoren unterzubringen. Informationen über den zusätzlichen Einfluss des Elektromotors des Hybrid-Antriebsstrangs können ferner auch bei der Ausglättung des Reservekapazitätsverlaufs entlang der Route berücksichtigt werden, so dass beispielsweise kurze Abschnitte einer Streckenklasse, insbesondere, wenn ohnehin ein relativ leerer Energiespeicher erwartet wird, nicht zwangsläufig zu einer Anpassung der Reservekapazität für solche Abschnitte führen.

Mit besonderem Vorteil ist jedoch eine wechselseitige Verknüpfung der Prädiktion hinsichtlich des Elektromotors und der Prädiktion hinsichtlich des elektromechanischen Fahrwerkssystems möglich, um die Effizienz des Energiemanagements insgesamt zu verbessern. So sieht eine besonders bevorzugte Ausgestaltung der vorliegenden Erfindung vor, dass bei einer Vorausplanung des Betriebs des Hybrid-Antriebsstrangs in Abhängigkeit von dem Rekuperationspotenzial des Elektromotors entlang der Route, auch der prädiktive Rückspeisebedarf berücksichtigt wird. Es ist im Stand der Technik bereits bekannt, prädiktive Betriebsstrategien für Hybrid-Antriebsstränge aufgrund einer bekannten Route festzulegen. Derartige Betriebsstrategien beinhalten beispielsweise, wann und in welchem Maße der Elektromotor zum Antrieb beitragen soll, wann wie stark durch den Elektromotor rekuperiert werden soll und dergleichen. Ist nun auch bekannt, wie der zukünftige Energiehaushalt des elektromechanischen Fahrwerksystems, insbesondere von diesem erhaltbare rückgespeiste Energie, aussieht, kann auch dies im Hinblick auf die Betriebsstrategie miteinbezogen werden, um eine übergreifende energetische Optimierung der Effizienz zu ermöglichen. Ist beispielsweise im Voraus bekannt, dass zusätzliche elektrische Energie generatorisch von den Aktoren des elektromechanischen Fahrwerkssystem erhalten wird, kann ein Verbrauch dieser Energie miteingeplant werden, um beispielsweise den Kraftstoffverbrauch seitens des Verbrennungsmotors zu begrenzen, auch wenn beispielsweise der Einsatz des Elektromotors nicht wirkungsgradoptimal wäre. In einer derartigen Ausprägung wird mithin eine besonders effiziente Betriebsweise eines Hybridsystems im Verbund mit einem elektromechanischen Fahrwerkssystem erreicht. Denn zur Verbesserung des Energiemanagements des gesamten Bordnetzes können die beschriebenen Informationen des elektromechanischen Fahrwerkssystem mit prädiktiven Rückspeisepotenzialen aus der Rekuperationsfunktion des Hybrid-Antriebsstrangs verknüpft werden.

Eine allgemeine vorteilhafte Weiterbildung der vorliegenden Erfindung sieht vor, dass die Fahrstilinformation den Fahrstil eines aktuellen Fahrers in Hinblick auf Aufbaubewegungen des Hybridkraftfahrzeugs beschreibt. Tendiert ein Fahrer beispielsweise zu einer eher sportlichen, dynamischen Fahrweise ist mit einer geringeren Rückspeisung von elektrischer Energie durch die Aktoren zu rechnen, welche stattdessen mehr Energie zu ihrem Betrieb benötigen könnten. Letztlich beschreibt die Fahrstilinformation insgesamt also, wie viel mechanische Bewegung durch den Fahrstil des Fahrers voraussichtlich induziert wird, die in elektrische Energie umgewandelt werden kann, wofür beispielsweise untersucht werden kann, wie hart der Fahrer beschleunigt/bremst, wie schnell er in Kurven einfährt und dergleichen. Entsprechende Vorgehensweisen zur Klassifizierung von Fahrern hinsichtlich ihres Fahrstils sind im Stand der Technik bereits grundsätzlich bekannt und können auch im Rahmen der vorliegenden Erfindung entsprechend eingesetzt werden.

Vorteilhaft ist es ferner, wenn als Situationsinformation ein dynamisch und/oder benutzergesteuert einstellbarer Betriebsparameter des elektromechanischen Fahrwerkssystems verwendet wird. Ein entsprechender Betriebsparameter kann beispielsweise beschreiben, mit wie viel Energieverbrauch durch die Aktoren des elektromechanischen Fahrwerkssystems zu rechnen ist, insbesondere im Vergleich zu dem Rückspeisepotential, das besteht. Beispielsweise wurde im Stand der Technik bereits vorgeschlagen, dem Fahrer die Möglichkeit zu geben, elektromechanische Fahrwerkssysteme auf eine eher sportliche Fahrweise oder auf eine eher komfortorientierte Fahrweise abzustimmen. Entsprechende, meist mehrere Betriebsparameter des elektromechanischen Fahrwerkssystems beschreibende Betriebsmodi erlauben Aussagen darüber, wie viel Energie, beispielsweise durch stärkere benötigte Dämpfung, voraussichtlich für die Aktoren benötigt wird und welche Situationen sich ergeben können, in denen die Aktoren (insbesondere durch nichtgedämpfte Aufbaubewegungen) Energie erzeugen, so dass ein ersichtlicher Einfluss auf den Rückspeisevorhalt und somit die freizuhaltende Reservekapazität besteht, welche beispielsweise durch einen entsprechenden Modifizierungsfaktor, der aus dem wenigstens einen Betriebsparameter ableitbar ist, verwendet werden kann. Mithin kann die dynamisch beziehungsweise fahrerseitig beeinflussbare Regelstrategie des elektromechanischen Fahrwerkssystems in ihrem Einfluss auf das Rückspeisepotential berücksichtigt werden, um eine noch genauere Voraussage zu erlauben.

In einer besonders vorteilhaften Ausgestaltung der vorliegenden Erfindung kann vorgesehen sein, dass zur Erniedrigung des Ladezustands des Energiespeichers, insbesondere zur Realisierung einer erhöhten Reservekapazität, ein Anteil der Energie des Energiespeichers über einen Gleichspannungswandler in ein Niederspannungsnetz des Hybridkraftfahrzeugs ausgegeben wird. Neben dem hier beschriebenen Bordnetz, an das der Elektromotor des Hybrid-Antriebsstrangs sowie die Aktoren des elektromechanischen Fahrwerkssystems angeschlossen sind und das beispielsweise eine Spannungslage von 48 V aufweisen kann, weisen Hybridkraftfahrzeuge üblicherweise auch wenigstens ein weiteres Bordnetz niedriger Spannung, mithin das Niederspannungsnetz, auf. Während es grundsätzlich nachteilig wäre, elektrische Energie auf die Niederspannungsseite zu verschieben, kann doch, wenn ein besonders hoher Energieeingang seitens des Elektromotors und/oder der Aktoren festgestellt wurde, es in Ausnahmefällen sinnvoll sein, gewinnbare bzw. gewonnene Energie, statt sie zu verwerfen oder anderweitig weniger sinnvoll einzusetzen, auf die Niederspannungsseite zu verschieben. Insbesondere erlaubt es das erfindungsgemäße Verfahren im Sinne eines gemeinsamen Energiemanagements für den Hybrid-Antriebsstrang und das elektromechanische Fahrwerkssystem auch, dass eine Erniedrigung des Ladezustands des Energiespeichers auch herbeigeführt wird, wenn ein hohes Rekuperationspotenzial seitens des Elektromotors besteht. Auch in solchen Fällen kann mithin elektrische Energie in das Niederspannungsnetz verschoben werden, beispielse zum Aufladen einer entsprechenden Niederspannungsbatterie.

Gerade auch im Zusammenhang mit der Eröffnung solcher zusätzlichen Möglichkeiten, wie der Energieverschiebung auf eine Niederspannungsseite, zeigen sich die Vorteile eines ganzheitlichen Energiemanagementansatzes für ein Bordnetz, an das Aktoren eines elektromechanischen Fahrwerkssystems und ein Elektromotor eines Hybrid-Antriebsstrangs angeschlossen sind. Nicht nur können Rückspeisepotenziale und Verbrauchspotenziale zu einer aufeinander abgestimmten Energiemanagementstrategie verarbeitet werden, sondern es können auch verschiedene Möglichkeiten genutzt werden, im Sinne einer insgesamten energetischen Optimierung Energie aus dem Bordnetz zu entfernen, insbesondere durch den grundsätzlich eher ungewollten Vorgang des Verschiebens von elektrischer Energie in ein Niederspannungsnetz. Eine entsprechende Energiemanagementstrategie ist beispielsweise dann sinnvoll, wenn eine Bergabfahrt (hohes Rückspeisepotenzial des Hybrid-Antriebsstrangs) auf kurviger Strecke (hoher Rückspeisebedarf des elektromechanischen Fahrwerkssystems) vorliegt.

Neben den Verfahren betrifft die Erfindung auch ein Hybridkraftfahrzeug, aufweisend ein Bordnetz, an das ein Energiespeicher, insbesondere eine Batterie, ein Elektromotor eines Hybrid-Antriebsstrangs, der auch einen Verbrennungsmotor aufweist, und generatorisch betreibbare Aktoren eines elektromechanischen Fahrwerkssystems angeschlossen sind, wobei dem Bordnetz ein Energiemanagementsteuergerät des Hybridkraftfahrzeugs zugeordnet ist, welches zur Durchführung des erfindungsgemäßen Verfahrens ausgebildet ist. Sämtliche Ausführungen bezüglich des erfindungsgemäßen Verfahrens lassen sich analog auf das erfindungsgemäße Hybridkraftfahrzeug übertragen, mit welchem mithin ebenso die bereits genannten Vorteile erhalten werden können.

Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: eine Prinzipskizze eines erfindungsgemäßen Hybridkraftfahrzeugs, und
- Fig. 2: eine Skizze zur Erläuterung des erfindungsgemäßen Verfahrens.

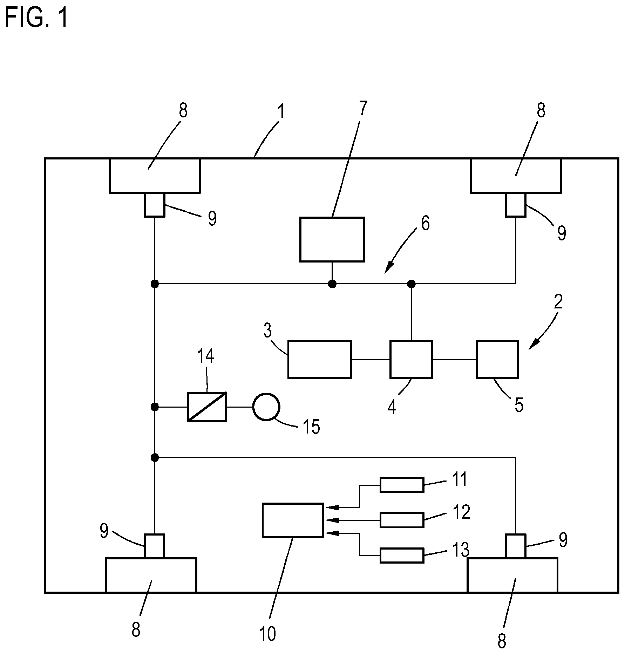

Fig. 1 zeigt eine Prinzipskizze eines erfindungsgemäßen Hybridkraftfahrzeugs 1. Dieses weist einen Hybrid-Antriebsstrang 2 auf, von dessen Komponenten vorliegend ein Verbrennungsmotor 3, ein Elektromotor 4 und ein Getriebe 5 gezeigt sind. Der Elektromotor 4, welcher zur Rekuperation selbstverständlich auch generatorisch betreibbar ist, wird hierbei bei einer Spannungslage von 48 V genutzt und ist an ein entsprechendes Bordnetz 6 angeschlossen, in dem auch ein wiederaufladbarer elektrischer Energiespeicher 7, hier eine Batterie, vorliegt.

An das Bordnetz 6 sind vorliegend jedoch auch einzelnen Rädern 8 zugeordnete Aktoren 9 angeschlossen, wobei die Aktoren 9 auch generatorisch betrieben werden können. Bei den Aktoren 9 kann es sich um Stabilisatoren, Dämpfer oder dergleichen handeln, die insbesondere selbst einen Aktor-Elektromotor aufweisen können. Die Aktoren 9 können in dem sich ergebenden aktiven, elektromechanischen Fahrwerkssystem angesteuert werden, um die Höhe des Aufbaus zu den Rädern 8 anzupassen, beispielsweise Schwingungen auszugleichen und dergleichen. Beispielsweise kann das elektromechanische Fahrwerkssystem wankstabilisierend wirken.

Dem Bordnetz 6, welches somit insgesamt eine Spannungslage von 48 V aufweist, ist ein Energiemanagement-Steuergerät 10 zugeordnet, welches mit weiteren Fahrzeugsystemen verbunden ist und von diesen Informationen erhalten kann, beispielsweise mit einem Navigationssystem 11, einem Fahrerinformationssystem 12, welches eine Fahrstilinformation liefern kann sowie sonstigen Fahrzeugsystemen 13, die beispielsweise auf Sensordaten basierende Situationsinformationen liefern können, insbesondere, was die Fahrbahnbeschaffenheit und den vorausliegenden Streckenverlauf, der auch aus Kameradaten prädiziert werden kann, angeht.

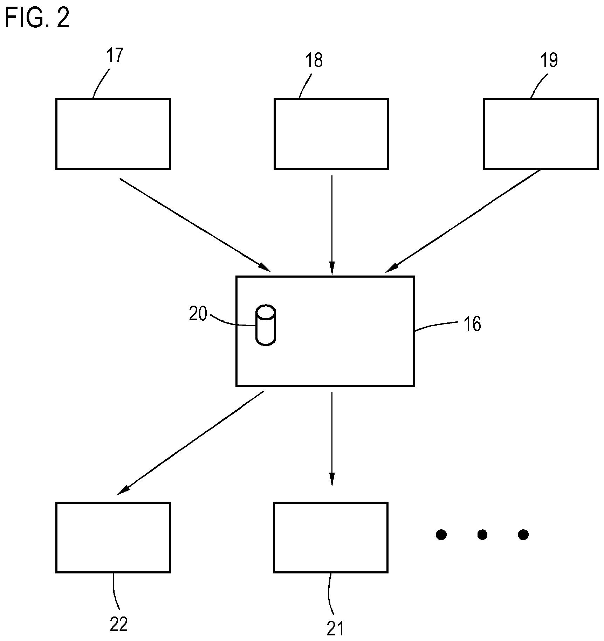

Das Bordnetz 6 ist ferner über einen Gleichspannungswandler 14 mit einem hier nur angedeuteten Niederspannungsnetz 15 des Hybrid-Kraftfahrzeugs 1 verbunden, welches beispielsweise eine Spannungslage von 12 V aufweisen kann. Das Energiemanagement Steuergerät 10 ist zur Durchführung des erfindungsgemäßen Verfahrens ausgebildet, das mit Hilfe der Zusammenhangsskizze der Fig. 2 näher erläutert werden soll.

Das eigentliche Energiemanagement wird dabei durch einen zentralen Schritt 16 angedeutet, der verschiedene Eingangsinformationen, die sowohl den Hybrid-Antriebsstrang 2 als auch das elektromechanische Fahrwerkssystem beziehungsweise seine Aktoren 9 betreffen, verwendet, um ein ganzheitliches, beide angeschlossene System berücksichtigende Energiemanagement durchzuführen. Eine wesentliche Eingangsinformation stammt dabei aus einer mittels Schritt 17 angedeuteten Prädiktion, die auf Situationsinformationen zur Streckenklasse und zur Fahrbahnbeschaffenheit beruht. Dabei werden, insbesondere aufgrund einer von dem Navigationssystem 11 bereitgestellten Route nebst Zusatzinformationen für einen möglichst weiten Zeitraum in die Zukunft vorliegend der Rückspeisebedarf der Aktoren 9, der Energiebedarf der Aktoren 9, ein Energiebedarf des Elektromotors 4 und ein Rekuperationspotenzial des Elektromotors 4 entlang der Route vorausberechnet. Auch kann hier bereits auf einen Verlauf des Ladezustands des Energiespeichers 7 geschlossen werden. Weitere Eingangsinformationen des Schrittes 16, die insbesondere das elektromechanische Fahrwerkssystem betreffen, sind eine Fahrstilinformation 18 über den Fahrstil eines Fahrers und Betriebsparameter des elektromechanischen Fahrwerkssystems, insbesondere ein von einem Benutzer gewählter Betriebsmodus.

Dabei sei angemerkt, dass selbstverständlich noch eine Vielzahl weiterer Eingangsinformationen, so diese nützlich für das Energiemanagement sind, herangezogen werden können.

Das Energiemanagement in Schritt 16 umfasst auch die Ermittlung einer freizuhaltenden Reservekapazität 20 des Energiespeichers 7, um den Rückspeisebedarf des elektromechanischen Fahrwerkssystems decken zu können. Das bedeutet, von den Aktoren 9 generierte elektrische Energie kann grundsätzlich in dem Bordnetz 6, konkret wenigstens teilweise im Energiespeicher 7, untergebracht werden. Die freizuhaltende Reservekapazität 20 wird dabei dynamisch angepasst, nachdem beispielsweise auf einer kurvigen Strecke mehr Rückspeisebedarf durch die Aktoren 9 besteht, als bei einer geraden, ruhigen Fahrt, beispielsweise auf einer Autobahn. Wird bislang freigehaltene Reservekapazität 20 im Laufe der Zeit freigegeben, wird diese dem Elektromotor 4 und somit dem Hybridsystem bereitgestellt. Dies ermöglicht eine verbesserte Ausnutzung der vorhandenen Kapazität des Energiespeichers 7. In die Ermittlung der freizuhaltenden Reservekapazität 20 gehen insbesondere auch die Fahrstilinformation 18 und die Betriebsparameter 19 ein, insbesondere in Form von Korrekturfaktoren.

Das Energiemanagement des Schrittes 16 geht jedoch über eine dynamische Variation des Rückspeisevorhalts, also der freizuhaltenden Reservekapazität 20, deutlich hinaus. Denn der Rückspeisebedarf der Aktoren 9 wird auch im Hinblick auf die Ermittlung einer Betriebsstrategie für den Hybrid-Antriebsstrang 2 berücksichtigt, gemeinsam mit dem Rekuperationspotenzial des Elektromotors 4, um insbesondere den Kraftstoffverbrauch durch den Verbrennungsmotor 3 möglichst gering zu halten, so dass auch voraussichtlich rückgespeiste Energie der Aktoren 9 möglichst weitgehend verwendet werden kann. Doch nicht nur ein Betrieb des Elektromotors 4, angedeutet im Schritt 21, kann als Maßnahme zur Entfernung von elektrischer Energie aus dem Bordnetz 6 in Betracht gezogen werden, sondern es ist im Rahmen der vorliegenden Erfindung auch möglich, beispielsweise, um die freizuhaltende Reservekapazität 20 zu schaffen bzw. unmittelbar generierte Energie der Aktoren 9 zu verbrauchen oder aber auch, um Rekuperationspotenzial des Elektromotors 4 zu nutzen, wie im Schritt 22 angedeutet, über den Gleichspannungswandler 14 elektrische Energie von dem Bordnetz 6 in das Niederspannungsnetz 15 zu verschieben, beispielsweise um eine dortige Niederspannungsbatterie aufzuladen.

Insbesondere ergibt sich also durch das vernetzte Energiemanagement unter gleichzeitiger Betrachtung des elektromechanischen Fahrwerkssystems und des Hybridsystems eine deutliche Verbesserung des Energiehaushalts, so dass mit anderen Worten gesagt werden kann, dass durch die Vernetzung des Rückspeisebedarfs des elektromechanischen Fahrwerksystems in Abhängigkeit von Strecken- und Fahrerprofil beziehungsweise Fahrbahnbeschaffenheiten mit der Betriebsstrategie des Hybridsystems eine übergreifende energetische Optimierung der Effizienz ermöglicht wird.

Dabei sei noch darauf hingewiesen, dass grundlegend, allerdings für Hybridsysteme als solche, bereits bekannte Konzepte beziehungsweise Algorithmen im Rahmen der vorliegenden Erfindung auch auf die Vorausberechnung der Rekuperation des elektromechanischen Fahrwerksystems angewendet werden können. In Analogie zum Elektromotor 4 und seiner Rekuperation können bestimmten Streckenabschnitten unter Kenntnis ihrer Eigenschaften beispielsweise mittlere Rückspeiseraten zugeordnet werden, die dann gegebenenfalls über von der Fahrstilinformation und dergleichen abhängige Korrekturfaktoren angepasst werden können. Im Rahmen der Einbindung in die Ermittlung einer Betriebsstrategie für den Hybrid-Antriebsstrang 2 können ermittelte Rückspeisebedarfe des elektromechanischen Fahrwerkssystems letztlich, gegebenenfalls unter zusätzlicher Berücksichtigung des Verbrauchs der Aktoren 9 bzw. des Elektromotors 4, dem Rückspeisepotenzial des Elektromotors 4 hinzugefügt werden. Auf diese Weise ist mit dem bekannten Wissen eine konkrete Umsetzung der erfindungsgemäßen Ansätze möglich.

## Patentansprüche

1. Verfahren zum Betrieb eines Bordnetzes (6) eines Hybridkraftfahrzeugs (1), wobei an das Bordnetz (6) ein Energiespeicher (7), insbesondere eine Batterie, ein Elektromotor (4) eines Hybrid-Antriebsstrangs (2), der auch einen Verbrennungsmotor (3) aufweist, und generatorisch betreibbare Aktoren (9) eines elektromechanischen Fahrwerksystems angeschlossen sind, wobei zur Einspeisung von durch wenigstens einen Teil der Aktoren (9) erzeugter elektrischer Energie in das Bordnetz (6) wenigstens eine Reservekapazität (20) des Energiespeichers (7) freigehalten wird, wobei die freizuhaltende Reservekapazität (20) in Abhängigkeit wenigstens einer den aktuellen und/oder zukünftigen Betrieb des Hybrid-kraftfahrzeugs (1) beschreibenden Situationsinformation dynamisch angepasst wird,
**dadurch gekennzeichnet,**
**dass** als Situationsinformation ein prädiktiver Rückspeisebedarf des elektromechanischem Fahrwerksystems für die Zukunft in Abhängigkeit einer eine zukünftige Route des Hybridkraftfahrzeugs (1) beschreibenden Routeninformation unter Berücksichtigung von Streckenklassen und/oder Fahrbahnbeschaffenheiten entlang der Route ermittelt wird, wobei in Abhängigkeit des prädiktiven Rückspeisebedarfs ein die zukünftigen Reservekapazitäten beschreibender Reservekapazitätsverlauf entlang der Route ermittelt wird.

2. Verfahren nach Anspruch 1,
**dadurch gekennzeichnet,**
**dass** durch Verringerung der Reservekapazität (20) freigegebene Kapazität des Energiespeichers (7) dem Elektromotor (4) bereitgestellt wird.

3. Verfahren nach Anspruch 1 oder 2,
**dadurch gekennzeichnet,**
**dass** als Situationsinformation eine Streckenklasse und/oder eine Fahrbahnbeschaffenheit der aktuell und/oder zukünftig befahrenen Strecke verwendet wird.

4. Verfahren nach Anspruch 3,
**dadurch gekennzeichnet,**
**dass** als Streckenklassen eine Stadtverkehrsklasse und/oder eine Autobahnklasse und/oder eine kurvige Landstraßenklasse und/oder eine wenig kurvige Landstraßenklasse und/oder eine Offroadklasse verwendet werden und/oder die Streckenklasse von einem Navigationssystem (11) des Hybridkraftfahrzeugs (1) bereitgestellt wird.

5. Verfahren nach einem der vorangehenden Ansprüche,
**dadurch gekennzeichnet,**
**dass** die Routeninformation von einem Navigationssystem (11) des Hybridkraftfahrzeugs (1) geliefert wird.

6. Verfahren nach einem der vorangehenden Ansprüche,
**dadurch gekennzeichnet,**
**dass** zusätzlich auch ein prädiktiver Ladezustand des Energiespeichers (7) und/oder ein Rekuperationspotential des Elektromotors (4) entlang der Route ermittelt und bei der Ermittlung der freizuhaltenden Reservekapazität (20) berücksichtigt wird.

7. Verfahren nach Anspruch 6,
**dadurch gekennzeichnet,**
**dass** bei einer Vorausplanung des Betriebs des Hybrid-Antriebsstrangs (2) in Abhängigkeit von dem Rekuperationspotential des Elektromotors (4) entlang der Route auch der prädiktive Rückspeisebedarf berücksichtigt wird.

8. Verfahren nach einem der vorangehenden Ansprüche,
**dadurch gekennzeichnet,**
**dass** die freizuhaltende Reservekapazität (20) zusätzlich in Abhängigkeit wenigstens einer den Fahrstil des Fahrers des Hybridkraftfahrzeuges (1) beschreibenden Fahrstilinformation dynamisch angepasst wird, wobei die Fahrstilinformation den Fahrstil eines aktuellen Fahrers im Hinblick auf Aufbaubewegungen des Hybridkraftfahrzeugs (1) beschreibt.

9. Verfahren nach einem der vorangehenden Ansprüche,
**dadurch gekennzeichnet,**
**dass** als Situationsinformation ein dynamisch und/oder benutzergesteuert einstellbarer Betriebsparameter des Fahrwerksystems verwendet wird.

10. Verfahren nach einem der vorangehenden Ansprüche,
**dadurch gekennzeichnet,**
**dass** zur Erniedrigung des Ladezustands des Energiespeichers (7), insbesondere zur Realisierung einer erhöhten Reservekapazität (20), ein Anteil der Energie des Energiespeichers (7) über einen Gleichspannungswandler (14) in ein Niederspannungsnetz (15) des Hybridkraftfahrzeugs (1) abgegeben wird.

11. Verfahren nach Anspruch 10,
**dadurch gekennzeichnet,**
**dass** eine Erniedrigung des Ladezustands des Energiespeichers (7) auch herbeigeführt wird, wenn ein hohes Rekuperationspotential seitens des Elektromotors (4) besteht.

12. Hybridkraftfahrzeug (1), aufweisend ein Bordnetz (6), an das ein Energiespeicher (7), insbesondere eine Batterie, ein Elektromotor (4) eines Hybrid-Antriebsstrangs (2), der auch einen Verbrennungsmotor (3) aufweist, und generatorisch betreibbare Aktoren (9) eines elektromechanischen Fahrwerksystems angeschlossen sind, wobei dem Bordnetz (6) ein Energiemanagementsteuergerät (10) des Hybridkraftfahrzeugs (1) zugeordnet ist, welches zur Durchführung eines Verfahrens nach einem der vorangehenden Ansprüche ausgebildet ist.

## Claims

1. Method for operating an on-board power supply network (6) of a hybrid motor vehicle (1), wherein the on-board power supply network (6) is connected to an energy store (7), in particular a battery, an electric motor (4) of a hybrid drive train (2), which also has an internal combustion engine (3), and actuators (9) of an electromechanical chassis system that can be operated as generators, wherein at least one reserve capacity (20) of the energy store (7) is kept open for receiving electrical energy generated by at least a portion of the actuators (9) to the on-board power supply network (6), wherein the reserve capacity (20) being kept open is dynamically adjusted as a function of at least one piece of situation information describing the current and/or future operation of the hybrid motor vehicle (1),
**characterized in that**
a predictive regenerative power requirement of the electromechanical chassis system for the future is determined as situation information as a function of route information describing a future route of the hybrid motor vehicle (1), taking into account road classes and/or carriageway conditions along the route, wherein a reserve capacity curve describing the future reserve capacities along the route is determined as a function of the predictive regenerative power requirement.

2. Method according to claim 1,
**characterized in that**
capacity of the energy store (7) that is freed up by decreasing the reserve capacity (20) is provided to the electric motor (4).

3. Method according to claim 1 or claim 2,
**characterized in that**
a road class and/or carriageway condition of the current and/or future route is used as the situation information.

4. Method according to claim 3,
**characterized in that**
the road classes used include a city traffic class and/or a motorway class and/or a winding country road class and/or a less winding country road class and/or an off-road class, and/or the road class is provided by a navigation system (11) of the hybrid motor vehicle (1).

5. Method according to any one of the preceding claims,
**characterized in that**
the route information is supplied by a navigation system (11) of the hybrid motor vehicle (1).

6. Method according to any one of the preceding claims,
**characterized in that**
a predictive charging status of the energy store (7) and/or a recuperation potential of the electric motor (4) is/are also determined along the route and taken into account when determining the reserve capacity (20) to be kept free.

7. Method according to claim 6,
**characterized in that**
the predictive regenerative power requirement is also taken into account when planning the operation of the hybrid drive train (2) in advance as a function of the recuperation potential of the electric motor (4) along the route.

8. Method according to any one of the preceding claims,
**characterized in that**
the reserve capacity (20) to be kept free is additionally adjusted dynamically as a function of at least one piece of driving style information describing the driving style of the driver of the hybrid motor vehicle (1), the driving style information describing the driving style of a current driver with regard to body movements of the hybrid motor vehicle (1).

9. Method according to any one of the preceding claims,
**characterized in that**
a dynamically and/or user-controlled adjustable operating parameter of the chassis system is used as situation information.

10. Method according to any one of the preceding claims,
**characterized in that**
in order to reduce the charging status of the energy store (7), in particular to achieve an increased reserve capacity (20), a proportion of the energy of the energy storage device (7) is released into a low-voltage network (15) of the hybrid motor vehicle (1) via a DC converter (14).

11. Method according to claim 10,
**characterized in that**
a reduction in the charging status of the energy store (7) is also brought about when there is a high recuperation potential on the part of the electric motor (4).

12. Hybrid motor vehicle (1), having an on-board power supply network (6), which is connected to an energy store (7), in particular a battery, an electric motor (4) of a hybrid drive train (2), which also has an internal combustion engine (3), and actuators (9) of an electromechanical chassis system which can be operated as generators, wherein the on-board power supply network (6) is associated with an energy management controller (10) of the hybrid motor vehicle (1), which is configured to perform a method according to any one of the preceding claims.

## Revendications

1. Procédé de fonctionnement d'un réseau de bord (6) d'un véhicule automobile hybride (1), dans lequel un dispositif de stockage d'énergie (7), en particulier une batterie, un moteur électrique (4) d'une chaîne cinématique hybride (2), qui présente également un moteur à combustion interne (3), et des actionneurs (9) d'un système de châssis électromécanique pouvant être actionnés en mode générateur sont raccordés au réseau de bord (6), dans lequel au moins une capacité de réserve (20) du dispositif de stockage d'énergie (7) est maintenue libre pour alimenter le réseau de bord (6) en énergie électrique générée par au moins une partie des actionneurs (9), dans lequel la capacité de réserve (20) à maintenir libre est adaptée de manière dynamique en fonction d'au moins une information de situation décrivant le fonctionnement actuel et/ou futur du véhicule automobile hybride (1),
**caractérisé en ce que**
un besoin d'alimentation de retour prédictif du système de châssis électromécanique pour l'avenir est déterminé en tant qu'information de situation en fonction d'une information d'itinéraire décrivant un itinéraire futur du véhicule automobile hybride (1) en tenant compte de classes de trajets et/ou de caractéristiques de la chaussée le long de l'itinéraire, dans lequel une évolution de la capacité de réserve décrivant les capacités de réserve futures est déterminée le long de l'itinéraire en fonction du besoin d'alimentation de retour prédictif.

2. Procédé selon la revendication 1,
**caractérisé en ce que**
la capacité libérée du dispositif de stockage d'énergie (7) est mise à la disposition du moteur électrique (4) par diminution de la capacité de réserve (20).

3. Procédé selon la revendication 1 ou 2,
**caractérisé en ce que**
une classe de trajets et/ou une caractéristique de la chaussée du trajet actuellement emprunté et/ou futur est utilisée en tant qu'information de situation.

4. Procédé selon la revendication 3,
**caractérisé en ce que**
une classe de trafic urbain et/ou une classe d'autoroute et/ou une classe de route de campagne sinueuse et/ou une classe de route de campagne peu sinueuse et/ou une classe tout-terrain est utilisée en tant que classe de trajets et/ou **en ce que** la classe de trajet est fournie par un système de navigation (11) du véhicule automobile hybride (1).

5. Procédé selon l'une quelconque des revendications précédentes,
**caractérisé en ce que**
l'information d'itinéraire est livrée par un système de navigation (11) du véhicule automobile hybride (1).

6. Procédé selon l'une quelconque des revendications précédentes,
**caractérisé en ce que**
un état de charge prédictif du dispositif de stockage d'énergie (7) et/ou un potentiel de récupération du moteur électrique (4) est en outre déterminé le long de l'itinéraire et pris en compte lors de la détermination de la capacité de réserve (20) à maintenir libre.

7. Procédé selon la revendication 6,
**caractérisé en ce que**
le besoin de récupération prédictif est également pris en compte lors d'une planification préalable du fonctionnement de la chaîne cinématique hybride (2) en fonction du potentiel de récupération du moteur électrique (4) le long de l'itinéraire.

8. Procédé selon l'une quelconque des revendications précédentes,
**caractérisé en ce que**
la capacité de réserve (20) à maintenir libre est en outre adaptée dynamiquement en fonction d'au moins une information de style de conduite décrivant le style de conduite du conducteur du véhicule automobile hybride (1), dans lequel l'information de style de conduite décrit le style de conduite d'un conducteur actuel en vue de mouvements de carrosserie du véhicule automobile hybride (1).

9. Procédé selon l'une quelconque des revendications précédentes,
**caractérisé en ce que**
un paramètre de fonctionnement du système de châssis réglable de manière dynamique et/ou commandé par l'utilisateur est utilisé en tant qu'information de situation.

10. Procédé selon l'une quelconque des revendications précédentes,
**caractérisé en ce que**
une part de l'énergie du dispositif de stockage d'énergie (7) est délivrée à un réseau basse tension (15) du véhicule automobile hybride (1) par l'intermédiaire d'un convertisseur de courant continu (14) pour diminuer l'état de charge du dispositif de stockage d'énergie (7), en particulier pour réaliser une capacité de réserve (20) accrue.

11. Procédé selon la revendication 10,
**caractérisé en ce que**
une diminution de l'état de charge du dispositif de stockage d'énergie (7) est également provoquée lorsqu'il existe un potentiel de récupération élevé du côté du moteur électrique (4).

12. Véhicule automobile hybride (1), présentant un réseau de bord (6) auquel sont raccordés un dispositif de stockage d'énergie (7), en particulier une batterie, un moteur électrique (4) d'une chaîne cinématique hybride (2) qui présente également un moteur à combustion interne (3), et des actionneurs (9) d'un système de châssis électromécanique pouvant être actionnés en mode générateur, dans lequel un appareil de commande de gestion d'énergie (10) du véhicule automobile hybride (1) est associé au réseau de bord (6), véhicule automobile hybride qui est conçu pour mettre en œuvre un procédé selon l'une quelconque des revendications précédentes.
